# EUROPÄISCHE PATENTSCHRIFT

(11) **EP 3 103 353 B1**
(45) Veröffentlichungstag und Bekanntmachung des Hinweises auf die Patenterteilung: **27.06.2018**
(21) Anmeldenummer: 15171864.0
(22) Anmeldetag: 12.06.2015
(51) Int. Cl.: A23L 29/225, A23L 23/00

(54) **MEHLSCHWITZE, LEBENSMITTEL SOWIE VERFAHREN ZU DEREN HERSTELLUNG**
ROUX, FOODSTUFF AND METHODS FOR PRODUCING SAME
ROUX, ALIMENT ET LEUR PROCÉDÉS DE FABRICATION

(43) Veröffentlichungstag der Anmeldung: 14.12.2016
(73) Patentinhaber: FRoSTA Aktiengesellschaft, 27572 Bremerhaven (DE)
(72) Erfinder: Buschmann, Urban, 31535 Neustadt (DE)
(74) Vertreter: Raffay & Fleck

(56) Entgegenhaltungen:
- DE-A1-102014 101 590
- JP-A- 2001 029 050
- US-A- 4 576 089
- US-A- 5 208 062
- US-A1- 2001 026 828
- BRIAN M. DEGNER ET AL: "Factors Influencing the Freeze-Thaw Stability of Emulsion-Based Foods", COMPREHENSIVE REVIEWS IN FOOD SCIENCE AND FOOD SAFETY, Bd. 13, Nr. 2, 21. Februar 2014 (2014-02-21), Seiten 98-113, XP55237170, US ISSN: 1541-4337, DOI: 10.1111/1541-4337.12050

## Beschreibung

Die vorliegende Erfindung betrifft ein industrielles Verfahren zur Herstellung einer essbaren Mehlschwitze sowie ein essbares und emulsionsmittel-, stabilisatorfreies Bindemittel ohne Zusatz von Emulgatoren sowie ein entsprechendes Lebensmittel.

Bindemittel sind zahlreich bekannt, so ist beispielsweise aus der EP 0173646 B1 und der US 2001/0026828 A1 bekannt, eine Schwitze aus geringen Mengen Mehl und Fett herzustellen und diese unter Verwendung eines Emulgators unter sterilen Bedingungen mit Wasser aufzugießen.
Auch sind zahlreiche andere Bindemittel, auch zum industriellen Einsatz, bekannt. So wird teilweise vorverkleisterte oder anders, beispielsweise thermisch, behandelte Stärke verwendet.
Auch ist die Mehlschwitze (auch Roux genannt) an sich als ein Basisverfahren, das in der traditionellen Küche eingesetzt wird und zur Abbindung von Soßen verwendet wird, bekannt. Durch die Erhitzung eines Gemisches aus Mehl und Fett oder Butter verliert die Stärke des Mehls den kristallinen Zustand und nimmt ein dreidimensionales Netzwerk mit einer hohen Wasseraffinität ein. Des Weiteren werden die Stärkeketten teilhydrolysiert und es kommt zur Bildung neuer chemischer Bindungen zwischen den Lipiden und den Proteinen des Mehls mit einer hohen Emulgierwirkung.

Die so erzeugte Schwitze wird mit einem kalten Fond, Wasser oder Milch aufgegossen (gelöscht). Die Suspension wird aufgekocht und geköchelt bis sie abgebunden ist.

Ein solches Verfahren lässt sich jedoch nicht im industriellen Maßstab realisieren, da in diesem Fall durch Verklumpungen und andere Erscheinungen kein zufriedenstellendes Ergebnis erzielt wird. Die hergestellte Schwitze verbindet sich nur schwierig und meist unvollständig mit der zugesetzten Flüssigkeit. Nachteilig ist auch, dass die herstellte Schwitze keine, auch keine kurze Lagerung duldet. Das Mehl setzt sich am Boden ab und wird innerhalb von kurzer Zeit sehr fest und praktisch nicht mehr gebrauchsfähig.

Auf Grund Problemen mit der Herstellung (teil-)abgebundener Soßen auf Basis der Schwitze, bestehen auf dem Markt keine entsprechenden Apparate zur industriellen Herstellung. Industriell werden daher andere Bindemittel eingesetzt. Die aus dem Stand der Technik bekannten industriell eingesetzten Bindemittel weisen den Nachteil auf, dass sie entweder Emulgatoren, Stabilisatoren und/oder Emulsionsmittel aufweisen oder, beispielsweise aufgrund der Vorverkleisterung, chemischen Modifizierung und/oder thermischer Behandlung nur vergleichsweise teuer bzw. energieintensiv und/oder aufwendig zu erzeugen sind. Darüber hinaus sind zahlreiche aus dem Stand der Technik bekannte natürliche Bindemittel nicht gefrier-tau-stabil.

Es ist des Weiteren wünschenswert, den Energieeintrag bei der Herstellung zu minimieren, dies auch in Bezug auf in-line tiefgefrorene Produkte ohne zwischenzeitliche Trocknung.

Somit ist es Aufgabe der Erfindung, ein Verfahren zur Herstellung eines, insbesondere weitgehend gefrier-tau-stabilen, Bindemittels sowie ein, insbesondere weitgehend gefrier-tau-stabiles, Bindemittel und ein entsprechendes Lebensmittel anzugeben, das ohne Zusatz von Emulgatoren, Stabilisatoren, Emulsionsmittel, behandelten oder vorverkleisterten Stärken auskommt und alleine auf natürlichen Rohstoffen basiert, mit wenigen unterschiedlichen Rohstoffen auskommt und energiearm hergestellt werden kann, eine hohe Bindewirkung, die insbesondere einstellbar ist, aufweist und geschmacklich und sensorisch die Vorteile einer traditionellen Mehlschwitze aufweist.

Gelöst wird dies durch ein Verfahren gemäß Anspruch 1 sowie ein Verfahren zur Herstellung eines Lebensmittels und ein Bindemittel gemäß Anspruch 14 und ein Lebensmittel gemäß Anspruch 15. Vorteilhafte Weiterbildungen sind in den Ansprüchen 2 bis 12 angegeben. Diese lassen sich auch auf das Bindemittel und das Lebensmittel entsprechend übertragen oder zu dessen Herstellung nutzen.

Gelöst wird die Aufgabe durch ein industrielles Verfahren zur Herstellung einer essbaren und, insbesondere weitgehend gefrier-tau-stabilen, Mehlschwitze. Dazu werden Mehl und Fett vermischt und zu einer Schwitze erhitzt. Dies erfolgt ohne Zugabe von Wasser und somit, abgesehen von dem im Mehl und Fett beinhalteten Wasser, trocken. Als industrielles Verfahren zeichnet sich das Verfahren dadurch aus, dass große Mengen Mehl und Fett, insbesondere mehr als zusammen 30 kg, insbesondere mehr als 50 kg zu einer Schwitze in einem Ansatz vermischt und erhitzt werden.

In die Schwitze wird erfindungsgemäß eine Flüssigkeit insbesondere unter gleichzeitigem oder zeitnahen mechanischen Eintrag von Energie eindosiert. Dies muss nicht unter weiterer Erhitzung und auch nicht im Behältnis, das zur Erhitzung genutzt wurde, erfolgen. Erfindungsgemäß wird die Schwitze zusammen mit der bereits eindosierten Flüssigkeit mit mindestens einer Homogenisations-, Misch- und/oder Knetvorrichtung, insbesondere mindestens einer Homogenisationsvorrichtung, unter Einbringung einer Energie von mindestens 0,1 J/kg Schwitze, insbesondere mindestens 0,5 J/kg Schwitze, insbesondere mindestens 1J/g Schwitze, insbesondere mindestens 5J/kg Schwitze und insbesondere weniger als 500kJ/kg Schwitze, insbesondere weniger als 450kJ/kg Schwitze, insbesondere maximal 50J/kg Schwitze, behandelt. Dabei ist es weitgehend meist unerheblich, ob die Energie zu einem Zeitpunkt und/oder an einer Stelle oder verteilt über den gesamten Soßenprozess eingebracht wird. Bei der mindestens einen Homogenisationsvorrichtung handelt es sich insbesondere um mindestens ein Rotor-Stator-System, ein Kutter, insbesondere mindestens ein Extruder, ein Prallplattensystem, eine Wirbelkammer, ein Hochdruckhomogenisatoren, ein Zahnkranzhomogenisator und/oder ein Walzenhomogenisator. Insbesondere erfolgt das Erzeugen der Schwitze und das Eindosieren und insbesondere auch das Behandeln mit der mindestens einen Homogenisations-, Misch- und/oder Knetvorrichtung emulsionsmittel-, stabilisatorfrei und ohne Zusatz von Emulgatoren. Die Zugabe der Flüssigkeit erfolgt dabei durch Eindosieren, auch schwallartiges Eindosieren oder Eindosieren in einem Guss. Dabei verbindet sich das zugesetzte Wasser schlagartig mit der Stärke unter Erzeugung von Bindung und es bildet sich eine hoch cremige Emulsion zwischen Fett und Wasser. Der Sauterdurchmesser liegt dabei meist deutlich über 150*µ*m oder 100*µ*m.

Die Aufgabe wird auch gelöst wenn eine Flüssigkeit unter Emulgieren in die wie oben geschildert erzeugte Schwitze gegeben wird und die Schwitze und die eindosierte Flüssigkeit mit mindestens einer Homogenisations-, Misch- und/oder Knetvorrichtung unter Einbringung einer Energie von mindestens 0,1J/kg Schwitze, insbesondere mindestens 0,5J/kg Schwitze, behandelt werden.

In der Regel bildet sich durch das Zugeben der Flüssigkeit eine Emulsion mit vergleichsweise großen Tröpfchen als innere oder dispergierte Phase. Durch die Homogenisierung, das Mischen und/oder Kneten, insbesondere Homogenisieren kann die Tröpfchengröße unter Auf- und Einbringung von Energie reduziert werden. Dadurch lässt sich eine gefrier-tau stabile Emulsion auch ohne Zusatz von Emulgatoren, Stabilisatoren, Emulsionsmitteln und/oder anderen Zusätzen erzielen.

Mit besonderem Vorteil beträgt der Sauterdurchmesser der Tröpfchen der Emulsion 10*µ*m oder mehr und/oder der Äquivalentdurchmesser von mehr als 50% der Tröpfchen der Emulsion 10*µ*m oder mehr.

Besonders bevorzugt wird es, wenn der Sauterdurchmesser der Tröpfchen der Emulsion 100*µ*m oder weniger beträgt und/oder der Äquivalentdurchmesser von mehr als 50% der Tröpfchen der Emulsion 100*µ*m oder weniger beträgt. Entscheidend dabei ist der angestrebte Soßentyp, wobei eine Sahnesoße kleinere und eine Bratensoße größere Tröpfchen erfordert. Insbesondere wird danach der Energieeintrag eingestellt.

Durch den Eintrag von mindestens 100J/kg Schwitze, insbesondere 500J/kg Schwitze bzw. der Erzielung der angegeben Tröpfchengrößen, kann erreicht werden, dass trotz der Verwendung einfachster Zutaten und unter Verzicht auf vorverkleisterte und/oder vorbehandelte Stoffe und auch unter Verzicht auf Zugabe von Emulsionsmittel, Stabilisatoren und Emulgatoren auf einfache und günstige Art und Weise sensorisch einwandfreie Grundemulsion mit hoher Weißkraft und Bindewirkung oder Soße erzeugt werden können, die über zahlreiche Stunden auch bei Raumtemperatur oder wahlweise gekühlt stabil ist und über zahlreiche Monate gefroren auch beim anschließenden Auftauen und Erwärmen stabil bleibt.

Als gefrier-tau stabil werden Produkte betrachtet, gefroren und aufgetaut werden können, ohne ihre Homogenität zu verlieren, insbesondere ohne beim beim Auftauen Wasser abzusetzen. Mit der Erfindung lassen sich solche Produkte erzeugen. Je nach Verfahren, insbesondere bei geringer eingebrachter Energie, sind die erfindungsgemäßen Produkte zwar stabil beim Einfrieren und Auftauen oder 2fachem Frieren und Auftauen, erreichen aber nicht unbedingt eine Stabilität bei 4 - 5fachem Frieren und Auftauen. Solche Produkte werden hier als weitgehend gefrier-tau-stabil bezeichnet. Prinzipiell ist aber das Verfahren, insbesondere bei Einbringen der als vorteilhaft geschilderter Energiemengen und/oder Verwendung von Mehl und Stärke, geeignet, auch gefrier-tau-stabile Produkte zu erzeugen.

Es ist es möglich, einen Teil der Energie in anschließenden Verarbeitungsprozessen, beispielsweise nach Eindosierung weiterer Bestandteile einer Soße, Creme oder Suppe einzubringen. Bevorzugt wird es jedoch, mindestens 0,1J/kg Schwitze, insbesondere mindestens 0,5J/kg Schwitze, insbesondere mindestens 1J/kg Schwitze, insbesondere mindestens 5J/kg Schwitze und insbesondere maximal 50J/kg Schwitze, während der Eindosierung oder in einem Zeitfenster von 0 bis 400 Sekunden, insbesondere von 0 bis 200 Sekunden nach der Eindosierung, insbesondere nach Beginn der Eindosierung, insbesondere der ersten Eindosierung, insbesondere mischend und/oder knetend, insbesondere durch mindestens einen Statikmischer, einzubringen. Insbesondere werden jedoch insgesamt mindestens 100 J/kg Schwitze, insbesondere mindestens 500 J/kg Schwitze, insbesondere mindestens 10 000 J/kg Schwitze, durch Kneten, Mischen und/oder Homogenisieren eingebracht, insbesondere in einem Zeitfenster von 0 bis 900 Sekunden nach der Eindosierung, insbesondere nach Beginn der Eindosierung, insbesondere der ersten Eindosierung.

Insbesondere erfolgt eine Behandlung mit der Homogenisationsvorrichtung, Misch- und/oder Knetvorrichtung während der gesamten Eindosierung oder jeweils in einem Zeitfenster von 0 bis 300 Sekunden, insbesondere 0 bis 120 Sekunden, nach jeder Eindosierung, insbesondere nach Beginn jeder Eindosierung, der Flüssigkeit und beginnt insbesondere schon vor der Eindosierung der Flüssigkeit.

Wenn Zeitfenster für die Behandlung angegeben wurden, startet das Einbringen der Energie innerhalb dieses Zeitfensters. Insbesondere wird auch die jeweils als Mindestenergie oder bevorzugte Mindestenergie angegebene Energie innerhalb dieses Zeitfensters eingebracht. Nach dem Zeitfenster kann weitere Energie eingebracht werden. Bevorzugt wird die Energie jedoch überwiegend, also zu mindestens 50 %, in den angegebenen Zeitfenstern eingebracht.

Besonders bevorzugt wird eine erste Behandlung mit mindestens einer Misch- und/oder Knetvorrichtung, mit mindestens einem Statikmischer, nach dem Eindosieren einer ersten Flüssigkeitsmenge und eine spätere Behandlung mit mindestens einer Homogenisationsvorrichtung, insbesondere mindestens einem Rotor-Stator-System, einem Kutter, einem Extruder, einem Prallplattensystem, einer Wirbelkammer, einem Hochdruckhomogenisator, einem Zahnkranzhomogenisator und/oder einem Walzenhomogenisator, insbesondere nach dem Eindosieren mindestens einer zweiten Flüssigkeitsmenge.

Die Behandlung mit der mindestens einen Homogenisationsvorrichtung, Misch- und/oder Knetvorrichtung dauert insbesondere nach der Eindosierung der Flüssigkeit weiter an, insbesondere über eine Zeit von mindestens 10 Sekunden, insbesondere mindestens 25 Sekunden.

Insbesondere wenn zuerst Flüssigkeit mit einer Temperatur von kleiner gleich 50°C eindosiert wird, erfolgt die Eindosierung der Flüssigkeit mit einer Temperatur von kleiner gleich 50°C insbesondere langsam, insbesondere mit einem Gewichtsstrom von 2 bis 25% des Gewichts der Schwitze pro Minute, insbesondere von mindestens 5 und/oder bis maximal 20 Prozent des Gewichtes der Schwitze pro Minute.

Mit besonderem Vorteil erfolgt die Eindosierung der Flüssigkeit, insbesondere bei Eindosierung einer Flüssigkeit mit einer Temperatur von weniger als 50°C, mit einem Gewichtsstrom von 2 bis 25% des Gewichts der Schwitze pro Minute, insbesondere von mindestens 5 und/oder bis maximal 20 Prozent des Gewichtes der Schwitze pro Minute. Dies hat sich als besonders vorteilhaft zur Erzielung guter Ergebnisse erwiesen. Bei einer solchen Betrachtung ist insbesondere nicht auf das gesamt Gewicht der ursprünglich erzeugten Schwitze abzustellen, sondern den Anteil der Schwitze, der mit der eindosierten Flüssigkeit jeweils vermengt wird.

Mit besonderem Vorteil werden die Schwitze und die bereits eindosierte Flüssigkeit in einem Kreislauf geführt und ist in diesem Kreislauf die mindestens eine Homogenisations-, Misch- und/oder Knetvorrichtung angeordnet. Dies bedeutet, dass zumindest jeweils ein Teil der Schwitze mit der darin eindosierten Flüssigkeit in einem Kreislauf geführt wird. So kann beispielsweise ein Vorratsbehältnis vorgesehen sein, in dem die Schwitze mit der bereits eindosierten Flüssigkeit lagert und von dem aus ein Umpumpen in einem Kreislauf wieder in das Vorratsbehältnis erfolgt. Es kann jedoch auch die gesamte Schwitze mit der bereits eindosierten Flüssigkeit in einem Kreislauf geführt werden. Alternativ können auch mehrere Homogenisations-, Misch- und/oder Knetvorrichtung in Reihe geschaltet werden, durch die die Schwitze mit der bereits eindosierten Flüssigkeit hindurch läuft. Dabei wird vorteilhafterweise Flüssigkeit vor mindestens einer Homogenisations-, Misch- und/oder Knetvorrichtung eindosiert. In einer Kreislaufführung wird eine Flüssigkeitszugabe vorteilhafterweise vor der Homogenisations-, Misch- und/oder Knetvorrichtung angeordnet und dort die Flüssigkeit mit dem angegebenen Gewichtsstrom eindosiert. Bei Führung in einer in Reihe geschalteten Anordnung von mehreren Homogenisations-, Misch- und/oder Knetvorrichtung ist dies entsprechend umsetzen. Eine Kombination von in Reihe geschalteten Homogenisationsvorrichtungen und der Kreisführung ist ebenfalls möglich. Durch eine solche Anordnung von insbesondere durch die Eindosierung unmittelbar vor der Homogenisationsvorrichtung kann ein besonders überzeugendes Ergebnis erzielt werden.

Bei Eindosierung von warmer oder heißer Flüssigkeit, insbesondere mit einer Temperatur von größer gleich 50°C ist ein schwallartiges Eindosieren von Flüssigkeit, zumindest bei der ersten Eindosierung von Flüssigkeit bevorzugt. Dabei wird durch Zugabe von Flüssigkeit insbesondere das Volumen innerhalb von maximal 15 Sekunden, insbesondere maximal 5 Sekunden, mindestens verdoppelt, insbesondere mindestens verdreifacht.

Vorteilhaft ist es, die Schwitze mit eindosierter Flüssigkeit mehrfach durch eine und/oder durch mehrere Homogenisationsvorrichtung zu führen.

Bevorzugt wird eine mittlere Passagehäufigkeit durch eine Homogenisations-, Misch- und/oder Knetvorrichtung von mindestens 2 Mal, insbesondere min. 5 Mal, bevorzugt mindestens 7 Mal, insbesondere maximal 20 Mal, insbesondere maximal 15 Mal, dabei kann es sich um eine Homogenisations-, Misch- und/oder Knetvorrichtung, die mehrmals passiert wird oder um mehrere Homogenisations-, Misch- und/oder Knetvorrichtung, die nacheinander durchlaufen, ggf. teilweise auch mehrfach durchlaufen, werden. Mit steigender Homogenisatorwirkung wird die Weißkraft höher.

Mit besonderem Vorteil wird die Flüssigkeit mit einem Gewichtsstrom von 2 bis 25%, insbesondere von mindestens 5% und/oder von insbesondere maximal 20% des im Kreislauf bzw. jeweils durch die Homogenisations-, Misch- und/oder Knetvorrichtung oder am Punkt der Eindosierung geführten Gewichtsstroms eindosiert. Dadurch kann das Ergebnis weiter verbessert werden.

Bevorzugt wird es, bei Ansätzen etwa das 0,3 bis 4fache des Gewichtes der Schwitze, insbesondere min. das 0,5 fache und/oder max. das 2 fache des Gewichts der Schwitze, pro Minute zu pumpen und (bei in Reihe geschalteten Homogenisations-, Misch- und/oder Knetvorrichtung pro Homogenisations-, Misch- und/oder Knetvorrichtung) zu homogenisieren. In einer Anordnung, bei der mehrere Homogenisations-, Misch- und/oder Knetvorrichtung in Reihe angeordnet sind und an mehreren Stellen eindosiert wird, verändert sich selbstverständlich im Laufe der Eindosierung über die passierte Wegstrecke der pro Minute durchgesetzte Massenstrom. Somit wird es bevorzugt, wenn am Ende der Massenstrom, die hier aufgezeigten Spanne nicht überstiegen wird. Wird zu Beginn ein geringerer Durchsatz gewählt, ist das für das Ergebnis unschädlich, verringert aber den Durchsatz unter das mögliche Maß. Dies gilt auch für die Führung im Kreislauf. Einen Durchsatz mit geringeren Massenströmen ist für das Ergebnis unproblematisch, verlängert aber die Verfahrensdauer und ist somit unökonomisch.

Mit besonderem Vorteil wird die Flüssigkeit unmittelbar vor der Passage der Homogenisations-, Misch- und/oder Knetvorrichtung bzw. bei Einsatz mehrerer Homogenisations-, Misch- und/oder Knetvorrichtungen unmittelbar vor der Passage einer Auswahl oder aller Homogenisations-, Misch- und/oder Knetvorrichtung eindosiert.

Mit besonderem Vorteil werden als Homogenisations-, Misch- und/oder Knetvorrichtung zumindest ein Rotor-Stator-System, ein Statikmischer, ein Extruder, ein Kutter, ein Prallplattensystem, eine Wirbelkammer, ein Hochdruckhomogenisator und/oder ein Walzenhomogenisator eingesetzt. Prinzipiell sind verschiedene Arten von Homogenisations-, Misch- und/oder Knetvorrichtung einsetzbar. Entscheidend ist, dass sie durch den genannten Energieeintrag eine entsprechende Homogenisierung erzeugen. Mit besonderem Vorteil wird dabei nicht der gesamte Ansatz zeitgleich von einer Homogenisations-, Misch- und/oder Knetvorrichtung behandelt, wie dies zum Beispiel beim Rühren in einem Vorratsbehältnis der Fall wäre. Vielmehr wird es bevorzugt, jeweils zu einer Zeit nur einen Teil des Ansatzes in jeder Homogenisations-, Misch- und/oder Knetvorrichtung zu behandeln, wie dies beispielsweise beim Führen der Schwitze mit der bereits eindosierten Flüssigkeit durch einen oder mehrere Homogenisations-, Misch- und/oder Knetvorrichtung gegeben sein kann. Insbesondere wird es bevorzugt, die Schwitze mit der bereits eindosierten Flüssigkeit mehrfach durch einen oder mehrere Homogenisations-, Misch- und/oder Knetvorrichtung zu führen.

Sofern von einer Schwitze mit bereits eindosierter Flüssigkeit die Rede ist, bedeutet dies nicht, dass bereits die vollständige Flüssigkeitsmenge eindosiert ist, sondern meint es die Schwitze mit der bis zu dem Zeitpunkt bereits eindosierten Flüssigkeit.

Ein besonderer Vorteil der vorliegenden Erfindung ist, dass vergleichsweise große Wahlfreiheit in Bezug auf die Temperatur der einzudosierenden Flüssigkeit besteht. Zum einen kann durch die Wahl der Temperatur der zu Beginn eindosierten Flüssigkeit Einfluss auf die Bindungskraft der Mehlschwitze genommen werden, zum anderen kann durch die Wahl der Temperatur Energie gespart bzw. die Temperatur des Produktes in weiten Bereichen eingestellt werden.

Bei Verwendung von kaltem Wasser mit einer Temperatur von unter 50°C, insbesondere unter 25°C auch zu Begin der Eindosierung, insbesondere bei der ausschließlichen Verwendung von kaltem Wasser, wird eine Grundemulsion erzeugt, die besonders gut gelagert werden kann und später die Basis einer Soße (Bindung und Emulsion) darstellen kann. Bei Verwendung von zumindest teilweise heißem Wasser zur Eindosierung, insbesondere zu Begin der Eindosierung, insbesondere mit einer Temperatur von 80°C und mehr, kann entweder die Grundemulsion in der Viskosität beeinflusst werden oder auch eine fertige Soße erzeugt werden.

Somit wird es bevorzugt, entweder mit einer Temperatur von größer als 80°C der Flüssigkeit mit der Eindosierung zu starten und anschließend mit einer Temperatur von weniger als 50°C, insbesondere von weniger als 25°C, weiter einzudosieren oder alternativ vollständig mit einer Temperatur von weniger als 50°C, insbesondere weniger als 25°C, einzudosieren. Insbesondere wird dabei bevorzugt, mindestens 50% der einzudosierenden Flüssigkeit mit einer Temperatur von kleiner als 50°C, insbesondere kleiner als 25°C, einzudosieren, insbesondere wenn das Endprodukt tiefgefroren werden soll. Insbesondere wird es bevorzugt, die Temperatur der einzudosierenden Flüssigkeit so zu wählen, dass die Mehlschwitze am Ende eine Temperatur von weniger als 20°C aufweist, insbesondere wenn sie später kühl gelagert und/oder tiefgefroren werden soll.

Mit besonderem Vorteil werden Fett und Mehl zur Bereitung der Schwitze auf eine Temperatur von 80°C bis 160°C erhitzt. Bei der Verwendung von Butter wird generell eine maximale Temperatur von 102°C angestrebt. Besonders bevorzugt wird es, auch in diesem genannten Temperaturbereich der Schwitze mit der Eindosierung der Flüssigkeit zu beginnen.

Mit besonderem Vorteil wird als Fett Öl und/oder Butter verwendet. Als Mehl wird vorteilhafter Weise zumindest auch Weizenmehl, Reismehl und/oder Maismehl verwendet, wodurch eine besonders angenehme Textur erzielt werden kann.

Mit besonderem Vorteil wird zur Zubereitung der Schwitze lediglich Fett und Mehl oder Fett, Mehl und Stärke verwendet. Dabei können verschiedene Fette, Mehle und Stärken zum Einsatz kommen. Sie können auch gemischt werden.

Mit Vorteil wird als Flüssigkeit Wasser, Milch und/oder Sahne, gegebenenfalls mit Beimischungen aus Gewürz, Salz und/oder Kräuter, verwendet. Mit besonderem Vorteil wird als Flüssigkeit ausschließlich Wasser, Milch und/oder Sahne und wahlweise Beimischungen aus Gewürz, Salz und/oder Kräuter verwendet. Mit besonderem Vorteil wird bei diesem Herstellungsverfahren und insbesondere auch bis zur Fertigstellung des Produktes emulsionsmittel-, stabilisatorfrei und/oder ohne Zusatz von Emulgatoren gearbeitet.

Gelöst wird die Aufgabe auch durch ein Verfahren zur Herstellung eines, insbesondere zumindest weitgehend gefrier-tau-stabilen, Lebensmittels, insbesondere eines Fertiggerichtes, einer Soße oder Suppe oder einer Nasspanade für das Panieren von Lebensmitteln unter Verwendung eines erfindungsgemäßen Bindemittels oder unter Verwendung eines entsprechenden Verfahrens zur Herstellung einer Mehlschwitze und Weiterverarbeitung oder Einsatz dieser bei Herstellung des Lebensmittels. Dabei wird das Bindemittel bzw. die Mehlschwitze zum Abbinden oder Eindicken verwendet.

Gelöst wird die Aufgabe auch durch ein essbares, insbesondere zumindest weitgehend gefrier-tau-stabiles, und emulsionsmittel- und stabilisatorfreies Bindemittel, beinhaltend eine erfindungsgemäße Mehlschwitze. Gelöst wird die Aufgabe auch durch ein, insbesondere weitgehend gefrier-tau-stabiles, Lebensmittel, beinhaltend eine erfindungsgemäße Mehlschwitze als Binde- oder Lebensmittelzutat. Somit wird die Aufgabe beispielsweise gelöst durch ein mit einer Nasspanade beinhaltend eine erfindungsgemäße Mehlschwitze als Binde- oder ein erfindungsgemäßes Lebensmittel oder ein erfindungsgemäß hergestelltes Bindemittel bzw. eine solche Mehlschwitze umhülltes Lebensmittel, insbesondere Fisch oder Fleisch, beinhaltend insbesondere Fisch oder Fleisch, ggf. belegt oder umhüllt mit weiteren Lebensmitteln. Auch können über der Nasspanade weitere Lebensmittel, wie beispielsweise eine Trockenpanade aufgetragen sein.

Durch die Erfindung lassen sich insbesondere folgende Vorteile realisieren. Durch die erfindungsgemäße Nutzung der klassischen Mehlschwitze in der Großtechnologie wird eine maximale Qualität von Soßen erzielt, die bisher nur in der gehobenen Küche in kleinerem Maßstab möglich war. Auch werden gegenüber bestehenden industriellen Verfahren Kostenvorteile möglich, da in dem Verfahren Basislebensmittel, wie natives Mehl 550, native Stärken und auch Basisfette, wie Pflanzenöl oder Butter, eingesetzt werden können. Auch ist eine Energieersparnis möglich, da im Vergleich zu industriell aufbereiteten Bindmitteln zum Beispiel kein Trocknungsverfahren notwendig ist. Darüber hinaus zeigt die Erfindung breite Verwendungsmöglichkeiten, da in dem Verfahren ein Basisbindemittel mit hoher Emulgierkraft und Weißkraft erzeugt wird. Die Anwendung kann überall erfolgen wo bisher Mehl oder Stärke und/oder andere Emulgatoren und/oder Bindemittel eingesetzt wurde, z.B. auch in Nasspanaden bei panierten Produkten.

Weitere vorteilhafte Ausbildungen und weitere Vorteile sollen rein exemplarisch und nicht beschränkend anhand der folgenden rein schematischen Skizzen verdeutlicht. Dabei zeigen die Figuren:
- Figur 1:: eine schematische Darstellung einer Apparatur zur Durchführung des erfindungsgemäßen Verfahrens unter Umpumpen der Schwitze und
- Figur 2:: eine schematische Darstellung einer Vorrichtung zur Durchführung des Verfahrens mit in Reihe geschalteten Homogenisationsvorrichtungen.

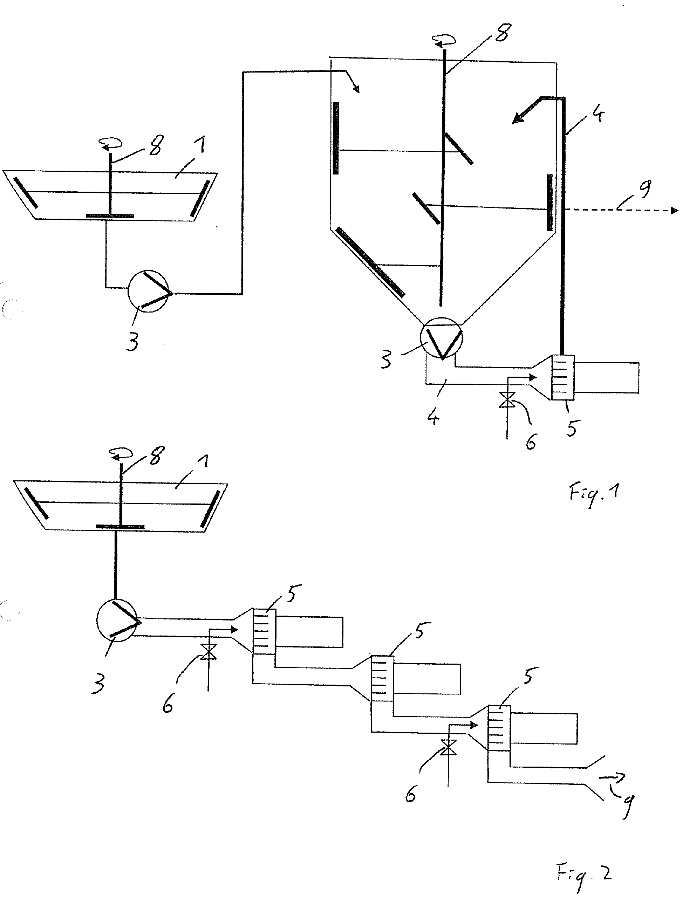

Figur 1 zeigt eine schematische Darstellung einer Anordnung zur Durchführung des erfindungsgemäßen Verfahrens. Zunächst wird in einem Behälter 1 unter Hitzeeinwirkung eine Schwitze aus Weizenmehl und Butter erzeugt. Diese wird sodann mittels einer Pumpe 3 in ein Vorratsbehältnis 2 mit Rührwerk 8 überführt und von da aus durch eine Pumpe 3 in einem Kreislauf 4 geführt. In dem Kreislauf 4 befindet sich eine Homogenisationsvorrichtung 5 sowie ein Eindosierventil 6. Während die Schwitze durch die Pumpe 3 im Kreislauf 4 geführt wird, passiert sie den Homogenisator 5, durch den Energie in die Schwitze eingebracht wird. Bevor die Schwitze den Homogenisator 5 passiert, wird Wasser durch das Eindosierventil 6 eindosiert. Zusammen mit dem eindosierten Wasser passiert die Schwitze somit den Homogenisator 5 und wird weiter in das Vorratsbehältnis zurückgeführt von wo aus sie erneut durch die Pumpe 3 in den Kreislauf geführt und weiter Wasser eindosiert wird, bis die vorgesehene Wassermenge erreicht ist. Ist die Wassermenge eindosiert und die vorgesehene Energie eingebracht, wird die Mehlschwitze über den Auslass 9 aus dem Kreislauf 4 zur weiteren Verwendung entfernt.

Figur 2 zeigt eine weitere schematische Darstellung einer alternativen Anordnung zur Durchführung des erfindungsgemäßen Verfahrens. Erneut wird zunächst in einem Behältnis 1 unter Hitzeeinwirkung eine Schwitze aus Mehl und Butter erzeugt. Diese wird durch eine Pumpe 3 in ein Rohrsystem 7 gepumpt, in dem sich hintereinander mehrere Homogenisatoren 5 befinden.

Vor einigen dieser Homogenisatoren 5 befinden sich Eindosierventile 6 durch die Wasser in vorgegebenen Mengen eindosiert wird, so dass die Schwitze am Ende des Rohrsystems 7 mit der vorgesehenen Wassermenge versetzt und mehrfach homogenisiert aus dem Auslass 9 ausgegeben werden kann.

Als Rezeptur eignet sich beispielsweise ein Ansatz von 30 kg Mehl und 30 kg Butter, erhitzt auf etwa 102°C, dem dann nach und nach insgesamt 95 I Wasser mit 12°C unter Homogenisierung zugesetzt werden.

### Bezugszeichenliste

- 1: Behälter
- 2: Vorratsbehältnis
- 3: Pumpe
- 4: Kreislauf
- 5: Homogenisationsvorrichtung
- 6: Eindosierventil
- 7: Rohrsystem
- 8: Rührwerk
- 9: Auslass

## Patentansprüche

1. Industrielles Verfahren zur Herstellung einer essbaren Mehlschwitze, wobei
a. Mehl und Fett oder Mehl, Fett und Stärke vermischt und zu einer Schwitze erhitzt werden, ohne Zugabe von Wasser
b. eine Flüssigkeit unter Emulgieren in die Schwitze eindosiert wird und
c. wobei die Schwitze und die eindosierte Flüssigkeit mit mindestens einer Homogenisations-, Misch- und/oder Knetvorrichtung (5) unter Einbringung einer Energie von mindestens 0,1J/kg Schwitze behandelt werden.

2. Verfahren nach Anspruch 1, wobei das Erzeugen der Schwitze und das Eindosieren ohne Zusatz von Emulsionsmitteln, Stabilisatoren und Emulgatoren erfolgt.

3. Verfahren nach einem der vorstehenden Ansprüche, wobei die Flüssigkeit mit einer Temperatur von < 50°C, insbesondere < 25 °C, eindosiert wird oder die Flüssigkeit zunächst mit einer Temperatur von > 80°C und insbesondere anschließend mit einer Temperatur von < 50°C, insbesondere < 25 °C, eindosiert wird.

4. Verfahren nach einem der vorstehenden Ansprüche, wobei mehrere Homogenisations-, Misch- und/oder Knetvorrichtungen (5) in Reihe geschaltet sind und von der Emulison passiert werden und Flüssigkeit vor dem Eintritt in mindestens eine der Homogenisations-, Misch- und/oder Knetvorrichtung (5) eindosiert wird, insbesondere vor mindestens zwei, insbesondere mindestens drei, Homogenisations-, Misch- und/oder Knetvorrichtungen (5).

5. Verfahren nach einem der vorstehenden Ansprüche, wobei Schwitze und eindosierte Flüssigkeit in einem Kreislauf (4) geführt werden und in diesem Kreislauf (4) die mindestens eine Homogenisationsvorrichtung (5) angeordnet ist.

6. Verfahren nach einem der vorstehenden Ansprüche, wobei die Flüssigkeit mit einem Gewichtsstrom von 2 bis 25%, insbesondere von mindestens 5 und/oder insbesondere von maximal 20%, des durch die Homogenisationsvorrichtung geführten Gewichtsstroms eindosiert wird.

7. Verfahren nach einem der vorstehenden Ansprüche, wobei die Homogenisations-, Misch- und/oder Knetvorrichtung ein Rotor-Stator-System, ein Statikmischer, ein Kneter, ein Extruder, ein Kutter, ein Prallplattensystem, eine Wirbelkammer, ein Hochdruckhomogenisatoren und/oder ein Walzenhomogenisator ist.

8. Verfahren nach einem der vorstehenden Ansprüche, wobei Fett und Stärke auf eine Temperatur von 80 - 160°C, bei Verwendung von Butter von maximal 102°C, erhitzt werden und in diesem Temperaturbereich der Schwitze mit der Eindosierung der Flüssigkeit begonnen wird.

9. Verfahren nach einem der vorstehenden Ansprüche, wobei als Fett Öl und/oder Butter und/oder als Mehl zumindest auch Weizenmehl, Reismehl und/oder Maismehl verwendet wird.

10. Verfahren nach einem der vorstehenden Ansprüche, wobei die Schwitze lediglich Fett und Mehl oder Fett, Mehl und Stärke enthält und/oder als Flüssigkeit Wasser, Milch und/oder Sahne verwendet wird.

11. Verfahren nach einem der vorstehenden Ansprüche, wobei ohne Zusatz von Emulsionsmitteln, Stabilisatoren und/oder Emulgatoren gearbeitet wird.

12. Verfahren zur Herstellung eines Lebensmittels, wobei ein Bindemittel nach einem der vorstehenden Ansprüche hergestellt und verwendet wird.

13. Essbares und emulsionsmittel- und stabilisatorfreies Bindemittel hergestellt nach einem Verfahren gemäß einem der Ansprüche 1 bis 12 .

14. Lebensmittel beinhaltend eine Mehlschwitze hergestellt nach einem Verfahren gemäß einem der Ansprüche 1 bis 12 als Binde- oder Lebensmittelzutat.

## Claims

1. An industrial method for producing an edible roux,
wherein
a. Flour and fat or flour, fat and starch are mixed and heated to obtain a roux, without adding water
b. a liquid is injected into the roux with emulsification and
c. wherein the roux and the injected liquid are treated with at least one homogenizing, mixing and/or kneading device (5) with introduction of an energy of at least 0.1 J/kg of roux.

2. The method of claim 1, wherein the generation of the roux and injection takes place without the addition of emulsifying agents, stabilizers and emulsifiers.

3. The method according to any one of the preceding claims, wherein the liquid is injected at a temperature of < 50°C, in particular < 25°C or the liquid first with a temperature of > 80°C and in particular subsequently with a temperature of < 50°C, in particular < 25°C.

4. The method according to any one of the preceding claims, wherein a plurality of homogenization, mixing and/or kneading devices (5) are connected in series and are passed by the emulison and liquid is injected before entering at least one of the homogenization, mixing and/or kneading device (5), in particular before at least two, in particular at least three, homogenization, mixing and/or kneading devices (5).

5. The method according to any one of the preceding claims, wherein the roux and injected liquid in a circuit (4) are guided and said at least one homogenization device (5) is arranged in this circuit (4).

6. The method according to any one of the preceding claims, wherein the liquid is injected, with a weight flow of 2 to 25%, in particular of at least 5% and/or in particular of not more than 20%, of the weight flow guided through the homogenizer.

7. The method according to any one of the preceding claims, wherein the Homo-genisations-, mixing and/or kneading device is a rotor-stator system, a static mixer, a kneader, an extruder, a cutter, a baffle system, a swirl chamber, a high pressure homogenizer and/or a roll homogenizer.

8. The method according to any one of the preceding claims, wherein fat and starch are heated to a temperature of 80 - 160°C, when using butter of at most 102°C, and is started in this temperature range of the roux with the injection of the liquid.

9. The method according to any one of the preceding claims, wherein at least wheat flour, rice flour and/ or maize flour is used as fat oil and/or butter and/or as flour.

10. The method according to any one of the preceding claims, wherein the roux contains only fat and flour or fat, flour and starch and/or liquid as water, milk and/or cream is used.

11. The method according to any one of the preceding claims, wherein the method takes place without the addition of emulsifying agents, stabilizers and/or emulsifiers.

12. A method for producing a food, wherein a binder is produced and used according to any one of the preceding claims.

13. An edible and emulsifier- and stabilizer-free binder prepared by a method according to any one of claims 1 to 12.

14. Food comprising a roux produced by a method according to any one of claims 1 to 12, as a binding or food ingredient.

## Revendications

1. Procédé industriel pour la production d'un roux comestible,
dans lequel
a. on mélange de la farine et de la graisse ou de la farine, de la graisse et de l'amidon avant de les chauffer pour obtenir un roux, sans ajouter d'eau
b. on injecte un liquide dans le roux avec émulsification et
c. dans lequel on traite le roux et le liquide injecté avec au moins un dispositif d'homogénéisation, de mélange et/ou de malaxage (5) avec introduction d'une énergie d'au moins 0,1 J / kg de roux.

2. Procédé selon la revendication 1, dans lequel la production du roux et l'injection se produisent sans addition d'agents émulsifiants, de stabilisants et d'émulsifiants.

3. Procédé selon l'une quelconque des revendications précédentes, dans lequel le liquide est injecté à une température < 50°C, en particulier < 25°C ou le liquide d'abord à une température > 80°C et en particulier par la suite avec une température < 50°C, en particulier < 25°C.

4. Procédé selon l'une quelconque des revendications précédentes, dans lequel une pluralité de dispositifs d'homogénéisation, de mélange et/ou de malaxage (5) sont connectés en série et sont passés par l'émulsion et l'on injecte le liquide avant de passer au dispositif d'homogénéisation, de mélange et/ou de malaxage (5), en particulier avant au moins deux, en particulier au moins trois, dispositifs d'homogénéisation, de mélange et / ou de malaxage (5).

5. Procédé selon l'une quelconque des revendications précédentes, dans lequel le roux et le liquide injecté dans un circuit (4) sont guidés et ledit au moins un dispositif d'homogénéisation (5) est agencé dans ce circuit (4).

6. Procédé selon l'une quelconque des revendications précédentes, dans lequel le liquide est injecté, avec un débit massique de 2 à 25%, en particulier d'au moins 5 % et/ou en particulier pas plus de 20% du débit massique guidé à travers l'homogénéisateur.

7. Procédé selon l'une quelconque des revendications précédentes, dans lequel le dispositif d'homogénéisation, de mélange et / ou de malaxage est un système rotor-stator, un mélangeur statique, un malaxeur, une extrudeuse, une fraise, un système de chicanes, une chambre de tourbillonnement, une homogénéisatrice haute pression et/ou un homogénéisateur à rouleau.

8. Procédé selon l'une quelconque des revendications précédentes, dans lequel la graisse et l'amidon sont chauffés à une température de 80 à 160°C, en utilisant du beurre sans dépasser 102°C, et l'opération commence dans cette plage de température du roux avec l'injection du liquide.

9. Procédé selon l'une quelconque des revendications précédentes, dans lequel on utilise au moins de la farine de blé, de la farine de riz et/ou de la farine de maïs comme huile grasse et/ou beurre et/ou comme farine.

10. Procédé selon l'une quelconque des revendications précédentes, dans lequel le roux ne contient que de la graisse et de la farine ou bien de la graisse, de la farine et de l'amidon et/ou un liquide comme de l'eau, du lait et/ou de la crème.

11. Procédé selon l'une quelconque des revendications précédentes, dans lequel le procédé a lieu sans ajouter d'agents émulsifiants, de stabilisants et/ou d'émulsifiants.

12. Procédé de production d'un aliment, dans lequel un liant est produit et utilisé selon l'une quelconque des revendications précédentes.

13. Liant comestible, exempt d'émulsifiant et de stabilisant obtenu par un procédé selon l'une quelconque des revendications 1 à 12.

14. Aliment comprenant un roux obtenu par un procédé selon l'une quelconque des revendications 1 à 12, comme liant ou ingrédient alimentaire.
